# EUROPÄISCHE PATENTSCHRIFT

(11) **EP 3 425 348 B1**
(45) Veröffentlichungstag und Bekanntmachung des Hinweises auf die Patenterteilung: **06.04.2022**
(21) Anmeldenummer: 18180041.8
(22) Anmeldetag: 27.06.2018
(51) Int. Cl.: G01F 15/06, G01F 15/00, G01D 4/00, H04L 9/32

(54) **VERFAHREN ZUR HERSTELLUNG EINER VERBRAUCHSWERTERFASSUNGSVORRICHTUNG**
METHOD FOR PRODUCING A CONSUMPTION VALUE DETECTION DEVICE
PROCÉDÉ DE FABRICATION D'UN DISPOSITIF DE DÉTECTION DES VALEURS DE CONSOMMATION

(30) Priorität: 04.07.2017 DE 102017114874
(43) Veröffentlichungstag der Anmeldung: 09.01.2019
(73) Patentinhaber: QUNDIS GmbH, 99098 Erfurt (DE)
(72) Erfinder: LEIPOLD, Jörg Dr.-Ing., 99974 Mühlhausen (DE); DOBENECK, Wolfgang, 99996 Menteroda OT Urbach (DE)
(74) Vertreter: Liedtke & Partner Patentanwälte

(56) Entgegenhaltungen:
- EP-A1- 2 523 417
- DE-B3-102009 030 828
- US-A1- 2012 137 126
- US-A1- 2016 204 935

## Beschreibung

Die Erfindung betrifft ein Verfahren zur Herstellung einer Verbrauchswerterfassungsvorrichtung.

Aus der DE 10 2009 030 828 B3 der Anmelderin, ,ist ein Wasser-/Wärmezähler bekannt. Der Wasser-/Wärmezähler umfasst einen in einem Unterteil angeordneten hydraulischen Geber und ein in einem Oberteil angeordnetes Zählwerk. Das Unterteil und das Oberteil sind durch zumindest eine zerstörungsfrei nicht zu lösende Verbindung miteinander verbunden. Das Zählwerk ist ein elektronisches Zählwerk. Das Oberteil und das Unterteil sind mittels eines Montageringes miteinander verbunden. Der Montagering und das Unterteil sind durch eine erste zerstörungsfrei nicht zu lösende Verbindung miteinander verbunden. Der Montagering und das Oberteil sind durch eine zweite zerstörungsfrei nicht zu lösende Verbindung miteinander verbunden. Der Montagering weist einen elektronischen Speicherbaustein und eine mit dem elektronischen Speicherbaustein verbundene erste Datenübertragungsschnittstelle auf. Das Oberteil weist eine mit der ersten Datenübertragungsschnittstelle korrespondierende und mit dem elektronischen Zählwerk verbundene zweite Datenübertragungsschnittstelle auf. In dem elektronischen Speicherbaustein sind Parameter des Unterteils speicherbar und über die Datenübertragungsschnittstellen an das elektronische Zählwerk übertragbar.

In der EP 2 523 417 A1 wird ein Koppeln eines Datensenders und eines Datenempfängers durch Verwenden eines Verschlüsselungsschlüssels als eine Kennung des Datensenders am Datenempfänger beschrieben. Zumindest eines der Geräte ist ein Verbrauchszähler zur Messung von Verbrauchsdaten eines bereitgestellten Versorgungsmediums. Die Geräte sind in einem Funknetz angeordnet. Der Kopplungsprozess umfasst die Schritte des Initiierens der Kopplung, des Übertragens des Verschlüsselungsschlüssels über eine gesicherte Verbindung, des Speicherns des Verschlüsselungsschlüssels beim Datenempfänger und des Verwendens des Verschlüsselungsschlüssels als Kennung des Datensenders beim Datenempfänger, wodurch der Datensender und der Datenempfänger gekoppelt werden.

Der Erfindung liegt die Aufgabe zu Grunde, ein gegenüber dem Stand der Technik verbessertes Verfahren zur Herstellung einer Verbrauchswerterfassungsvorrichtung anzugeben.

Die Aufgabe wird erfindungsgemäß gelöst durch ein Verfahren zur Herstellung einer Verbrauchswerterfassungsvorrichtung mit den Merkmalen des Anspruchs 1.

Vorteilhafte Ausgestaltungen der Erfindung sind Gegenstand der Unteransprüche.

In einem Verfahren zur Herstellung einer Verbrauchswerterfassungsvorrichtung werden Daten eines Volumengebers in einer dem Volumengeber zugeordneten Speichereinheit gespeichert, wobei der Volumengeber mit einem elektronischen Zählwerk gekoppelt wird und wobei die Daten, insbesondere Parameter, des Volumengebers an das elektronische Zählwerk übertragen werden. Das elektronische Zählwerk kann alternativ oder zusätzlich als ein elektronisches Rechenwerk ausgebildet sein oder ein solches Umfassen. Beispielsweise umfasst das elektronische Zählwerk ein solches elektronisches Rechenwerk, um erfasste Bewegungen, insbesondere Umdrehungen, des Volumengebers in eine zu zählende Durchflussmenge und/oder Wärmemenge umzurechnen.

Erfindungsgemäß werden die Daten verschlüsselt in der dem Volumengeber zugeordneten Speichereinheit gespeichert und somit zweckmäßigerweise auch verschlüsselt an das elektronische Zählwerk übertragen und in diesem entschlüsselt und verwendet. Die Daten umfassen insbesondere eine Korrekturfunktion für den Volumengeber, mittels welcher die exakte Verbrauchswerterfassung sichergestellt wird. Diese Korrekturfunktion ist beispielsweise eine Kennlinie einer Umdrehungszahl eines als Flügelrad ausgebildeten oder ein solches umfassenden Volumengebers in Abhängigkeit von einem Volumenfluss und/oder einer Durchflussmenge pro Zeit und/oder einem Wasserdruck. Mittels einer solchen Korrekturfunktion können beispielsweise Abweichungen von einer Standardvorgabe korrigiert werden.

Die Verbrauchswerterfassungsvorrichtung ist beispielsweise als ein Wasser-/Wärmezähler ausgebildet, d. h. als ein Wasserzähler, welcher zweckmäßigerweise eine Durchflussmenge des Wassers erfasst, oder als ein Wärmezähler, welcher zweckmäßigerweise eine Durchflussmenge des Wassers und zudem eine Temperatur des jeweils durchfließenden Wassers erfasst. Ein solcher Wasser-/Wärmezähler wird bereits in der DE 10 2009 030 828 B3 der Anmelderin beschrieben.

Die erfindungsgemäße Lösung ist insbesondere eine Weiterbildung der in dieser DE 10 2009 030 828 B3 beschriebenen Herstellung der dort als Wasser-/Wärmezähler ausgebildeten Verbrauchswerterfassungsvorrichtung.

Die Kopplung des elektronischen Zählwerks mit dem Volumengeber, auch als hydraulischer Geber bezeichnet, erfolgt zweckmäßigerweise auf die bereits in der DE 10 2009 030 828 B3 beschriebene Weise, d. h. über zumindest eine zerstörungsfrei nicht zu lösende Verbindung, vorzugsweise mittels eines Montagerings. Hierbei werden der Montagering und ein Gebergehäuse des Volumengebers durch eine erste zerstörungsfrei nicht zu lösende Verbindung miteinander verbunden und der Montagering und ein Zählwerkgehäuse des elektronischen Zählwerks werden durch eine zweite zerstörungsfrei nicht zu lösende Verbindung miteinander verbunden. Zweckmäßigerweise weist der Montagering die dem Volumengeber zugeordnete Speichereinheit auf, welche beispielsweise als ein elektronischer Speicherbaustein ausgebildet ist. Das Verbinden des Montagerings mit dem Volumengeber, d. h. mit dessen Gehäuse, über die erste zerstörungsfrei nicht zu lösende Verbindung erfolgt zweckmäßigerweise an einem Prüfungsort, an welchem die Daten oder zumindest einige der Daten, insbesondere eine Korrekturfunktion, des Volumengebers ermittelt und/oder geprüft und in der dem Volumengeber zugeordneten Speichereinheit gespeichert werden, beispielsweise in einer anerkannten Prüfstelle für derartige Volumengeber. Bei diesem Prüfungsort, im Folgenden als anerkannte Prüfstelle bezeichnet, kann es sich beispielsweise um eine staatliche oder staatlich zugelassene Eichstelle handeln.

Durch die verschlüsselte Speicherung der Daten, insbesondere Parameter, des Volumengebers in der dem Volumengeber zugeordneten Einheit, beispielsweise durch Mittel der schweren Kryptierung, wird sichergestellt, dass die Daten nicht verfälscht werden können und dass es vorteilhafterweise nicht möglich ist, unerkannt Duplikate der Daten herzustellen. Dies betrifft insbesondere die Korrekturfunktion, bei welcher durch die erfindungsgemäße Lösung sichergestellt ist, dass sie nicht verfälscht werden kann und vorteilhafterweise nicht unerkannt Duplikate hergestellt werden können. Dadurch können beispielsweise keine Raubkopien der Daten hergestellt werden, welche dann mit Volumengebern verknüpft werden, um vorzutäuschen, dass es sich um ordnungsgemäß geprüfte Volumengeber handelt.

In einer vorteilhaften Ausführungsform werden die Daten mittels eines CBC-Verfahrens (Cipher Block Chaining Mode) verschlüsselt, dass zweckmäßigerweise mindestens AES128 (AES=Advanced Encryption Standard) als schwere Verschlüsselung nutzt. Dadurch wird die Unverfälschtheit der Daten des Volumengebers sichergestellt. Würde beispielsweise ein Fälscher auch nur ein Bit im Datenbereich ändern, würden ca. die Hälfte aller Bits des Sicherheitsmerkmals umgekippt, d. h. verändert, werden.

Vorteilhafterweise wird als zusätzliche Sicherheit ein Datum einer Prüfung des Volumengebers durch die anerkannte Prüfstelle auf eine nur dem elektronischen Zählwerk bekannte Weise in einen Initialisierungsvektor des CBC-Verfahrens eingerechnet. Dies wird auch als Methode des "Versalzens" bezeichnet, d. h. es verhindert eine tabellenoptimierte Schlüsselermittlung. Dadurch existiert zusätzlich zum Geheimnis des Schlüssels das Geheimnis des Verfahrens zur Bildung des Initialisierungsvektors. Damit wird ein anerkannt sicheres Verschlüsselungsverfahren in Form der AES128-Verschlüsselung in unveränderter Weise eingesetzt und wird durch ein zusätzliches Geheimnis, das unabhängig von diesem Verschlüsselungsverfahren eingesetzt wird, zusätzlich abgesichert. Die Sicherheit des Verschlüsselungsverfahrens AES128 selbst wird dadurch nicht beeinträchtigt.

Zweckmäßigerweise wird durch technische Maßnahmen, beispielsweise durch das Verschließen der Debugschnittstelle eines Mikrocontrollers des elektronischen Zählwerks (zum Beispiel burn fuse) sichergestellt, dass aus dem elektronischen Zählwerk Schlüssel und Firmware nicht ausgelesen werden können. Damit wird die Sicherheit beider Geheimnisse sichergestellt. Derartige Maßnahmen werden beispielsweise von Herstellern von Mikrocontrollern angeboten und sind auch für andere Zwecke gebräuchlich. Sie werden als sicher eingeschätzt.

In einer vorteilhaften Ausführungsform werden die Daten bei deren Erstellung mittels MAC (Message Authentication Code, auch als Nachrichtenauthentifizierungscode bezeichnet) abgesichert. Diese Absicherung ist ähnlich einer Absicherung mit einer Signatur und weist somit ähnliche Vorteile auf. Der Unterschied zur Signatur besteht darin, dass sowohl Ersteller als auch Prüfer des MAC das Verschlüsselungsverfahren und den vollständigen Schlüssel kennen müssen und somit beide in der Lage sind, einen MAC zu berechnen. Dies ist somit ein symmetrisches Verfahren, es existiert kein öffentlicher Schlüssel. Ein solcher öffentlicher Schlüssel ist für das beschriebene Verfahren zur Herstellung der Verbrauchswerterfassungsvorrichtung auch nicht erforderlich. Im Gegenteil ist dies vorteilhaft, da es für jeden Dritten auf diese Weise nicht möglich ist, zufällig generierte Datensätze schnell zu überprüfen.

Vorteilhafterweise werden die Daten des Volumengebers im elektronischen Zählwerk gespeichert, wobei zweckmäßigerweise nach der Speicherung der Daten einer vorgegebenen Anzahl von Volumengebern die Speicherung der Daten eines weiteren Volumengebers blockiert wird. Dadurch kann das elektronische Zählwerk nicht dazu verwendet werden, beliebig viele Volumengeber auf eine eventuelle Richtigkeit ihrer Daten zu überprüfen, da es nur eine limitierte Anzahl von Versuchen erlaubt, d. h. nur die Kopplung mit einer limitierten Anzahl von Volumengebern. Beispielsweise werden die Daten des jeweiligen Volumengebers bei dessen Kopplung mit dem elektronischen Zählwerk in einem Log, beispielsweise in einem Flashspeicher eines Mikrocontrollers des elektronischen Zählwerks, unverlierbar im elektronischen Zählwerk gespeichert. Nach einer vorgegebenen, zweckmäßigerweise kleinen, Anzahl solcher Einträge der Daten von Volumengebern wird jeder neu hinzukommende Volumengeber zurückgewiesen.

Die Daten des Volumengebers umfassen vorteilhafterweise mindestens:
- eine Nummer des Volumengebers,
- eine Spezifikation des Volumengebers, beispielsweise eine Beachtung unterschiedlicher Baulängen und Durchflussbereiche,
- eine Korrekturfunktion,
- ein Zeitstempel der Prüfung des Volumengebers durch die anerkannte Prüfstelle,
- eine Kennung der anerkannten Prüfstelle, welche die Prüfung des Volumengebers durchgeführt hat,
- ein Ende einer Eichgültigkeit des Volumengebers, ermittelbar beispielsweise aus dem Zeitstempel der Prüfung zuzüglich der Eichgültigkeitsdauer,
- MAC

Damit können bei einem möglichen Betrugsversuch nur identische Kopien der Daten erstellt und einem anderen Volumengeber zugeordnet werden und insbesondere keine Daten mit einer veränderten Nummer des Volumengebers, mit einer eigenen Korrekturfunktion oder mit einem der anderen oben genannten veränderten Daten.

In einer vorteilhaften Ausführungsform sendet das elektronische Zählwerk zumindest die Nummer des Volumengebers an zumindest eine externe Einheit. Dies erfolgt beispielsweise bei einer jeweiligen Auslesung des elektronischen Zählwerks, d. h. beispielsweise bei einer Erfassung eines jeweiligen Zählerstandes, zum Beispiel mittels eines Datensammlers als externe Einheit. Existieren aufgrund von Fälschungen eines Volumengebers, genauer gesagt von Daten eines Volumengebers, welche anderen Volumengebern zugeordnet wurden, mehrere Volumengeber, die die gleiche Nummer aufweisen, kann dies auf diese Weise festgestellt werden. Durch die individuelle Nummerierung jedes Volumengebers sind die Volumengeber wiederzuerkennen und eindeutig zu identifizieren, wenn es keine Fälschungen gibt. Des Weiteren sind Fälschungen, wie bereits erwähnt, durch mehrfaches Auslesen der gleichen Nummer an mit verschiedenen Volumengebern verbundenen elektronischen Zählwerken erkennbar. Vorteilhafterweise wird die Nummer des jeweiligen Volumengebers, wenn dieser in Verkehr gebracht wird, d. h. vom Hersteller einem Kunden übergeben wird, mit dem Kunden verknüpft. D. h. es werden vorteilhafterweise der jeweilige Volumengeber mit seiner Nummer und der Empfänger, d. h. der Kunde, welchem der jeweilige Volumengeber ausgehändigt wurde, zusammen registriert. Treten mehrere Volumengeber mit der gleichen Nummer auf, kann somit der Ausgangspunkt der Fälschungen lokalisiert werden, da alle derartigen Fälschungen ihren Ausgangspunkt beim dem Kunden übergebenen Originalvolumengeber haben.

In einer vorteilhaften Ausführungsform werden ein Zeitpunkt der Kopplung des Volumengebers mit dem elektronischen Zählwerk und eine Nummer des elektronischen Zählwerks vom elektronischen Zählwerk an die dem Volumengeber zugeordnete Speichereinheit übertragen und darin gespeichert. Auf diese Weise kann der Volumengeber nicht mit einem anderen elektronischen Zählwerk verwendet werden. D. h. würde der Volumengeber vom elektronischen Zählwerk getrennt und mit einem weiteren elektronischen Zählwerk gekoppelt, so versucht dieses weitere elektronische Zählwerk, den Zeitpunkt seiner Kopplung mit dem Volumengeber und seine Nummer an die dem Volumengeber zugeordnete Speichereinheit zu übertragen und darin zu speichern. Dies ist jedoch nicht möglich, da darin bereits die Nummer des vorherigen elektronischen Zählwerks und der Zeitpunkt von dessen Kopplung mit dem Volumengeber gespeichert sind. Somit wird der Volumengeber von diesem weiteren elektronischen Zählwerk verworfen, d. h. eine Kopplung mit diesem weiteren elektronischen Zählwerk ist nicht möglich, da sie von diesem weiteren elektronischen Zählwerk nicht akzeptiert wird. Um dies sicherzustellen, ist die dem Volumengeber zugeordnete Speichereinheit zweckmäßigerweise derart ausgestaltet, dass nur ein einziger Zeitpunkt der Kopplung und nur eine einzige Nummer eines elektronischen Zählwerks darin gespeichert werden können, d. h. nicht mehrere Zeitpunkte und nicht mehrere Nummern elektronischer Zählwerke.

Dies ist vorteilhafterweise eine zusätzliche Sicherung neben dem vorteilhafterweise zur Verbindung von Volumengeber und elektronischem Zählwerk auf die oben beschriebene Weise verwendeten Montagering oder einer anderen mechanischen Sicherung, welcher/welche vorteilhafterweise durch das Trennen von Volumengeber und elektronischem Zählwerk zerstört wird. Auf diese Weise, d. h. dadurch, dass der Volumengeber mit der ihm zugeordneten Speichereinheit nur mit einem elektronischen Zählwerk gekoppelt werden kann, wird sichergestellt, dass der Volumengeber nach dem Trennen vom elektronischen Zählwerk zunächst neu geeicht wird, d. h. dass ihm eine neue Korrekturfunktion zugeordnet wird, welche zweckmäßigerweise in einer neuen ihm zugeordneten Speichereinheit gespeichert wird, beispielsweise in einem neuen Montagering mit einer solchen Speichereinheit, und erst danach wieder mit einem elektronischen Zählwerk verbunden wird.

In einer vorteilhaften Ausführungsform werden die Daten des Volumengebers mittels eines Gerätes erzeugt und in der dem Volumengeber zugeordneten Speichereinheit gespeichert, wobei dieses Gerät nur temporär, d. h. nur für eine vorgegebene, vorteilhafterweise kurze, Zeit zur MAC-Berechnung befähigt ist. Dadurch wird eine sichere Herstellung von Volumengebern, insbesondere von funktionstüchtigen und vorteilhafterweise geeichten und/oder mit einer korrekten Korrekturfunktion versehenen Volumengebern, sichergestellt. Insbesondere wird dadurch die Zuordnung falscher Daten, insbesondere einer falschen Korrekturfunktion, zu einem Volumengeber verhindert. Insbesondere wird das Speichern solcher falscher Daten in der dem Volumengeber zugeordneten Speichereinheit verhindert.

Das Erzeugen der Daten des Volumengebers und deren Speicherung in der dem Volumengeber zugeordneten Speichereinheit mittels dieses Gerätes wird vorteilhafterweise von der anerkannten Prüfstelle durchgeführt. Das hierfür verwendete Gerät kann beispielsweise als ein modifiziertes elektronisches Zählwerk ausgebildet sein, welches erweiterte Fähigkeiten aufweist, diese Daten zu erstellen und in der dem Volumengeber zugeordneten Speichereinheit zu speichern. Beispielsweise weist das Gerät hierfür eine entsprechend modifizierte Software auf. D. h. das Gerät ist beispielsweise als ein softwareseitig modifiziertes elektronisches Zählwerk ausgebildet. Beispielsweise wird in der anerkannten Prüfstelle die Korrekturfunktion für den jeweiligen Volumengeber ermittelt, zum Beispiel mittels dieses Gerätes, und dann wird diese Korrekturfunktion mittels dieses Gerätes zusammen mit den anderen Daten in der Speichereinheit gespeichert, welche dem Volumengeber zugeordnet ist oder anschließend, zweckmäßigerweise ebenfalls von der anerkannten Prüfstelle, dem Volumengeber zugeordnet wird. Beispielsweise wird die Speichereinheit durch Anordnen des Montagerings am Volumengeber dem Volumengeber zugeordnet, entweder vor oder nach dem Speichern der Daten.

Dadurch, dass dieses Gerät nur temporär zur MAC-Berechnung befähigt ist, wird dessen Missbrauch, beispielsweise nach einem Diebstahl aus der anerkannten Prüfstelle, verhindert oder zumindest erschwert, denn das Gerät kann nicht zur Erstellung einer größeren Anzahl von Volumengebern genutzt werden, genauer gesagt kann es nicht zur Erzeugung von Daten für eine größere Anzahl von Volumengebern und zur Speicherung dieser Daten in den jeweiligen Speichereinheiten genutzt werden, wenn die Befähigung zur MAC-Berechnung nicht erneuert wird. Die Erneuerung der Befähigung zur MAC-Berechnung bedarf vorteilhafterweise einer autorisierten Handlung der anerkannten Prüfstelle.

Für diese autorisierte Handlung zur Erneuerung der Befähigung zur MAC-Berechnung ist vorteilhafterweise die Kenntnis eines weiteren Geheimnisses erforderlich, wobei diese Kenntnis vorteilhafterweise auf die anerkannte Prüfstelle beschränkt ist. Beispielsweise wird der anerkannten Prüfstelle ein Schlüssel zur Verfügung gestellt, der nur einen Tag oder eine vorgegebene andere, vorteilhafterweise kurze, Zeitspanne Gültigkeit aufweist. Mittels dieses Schlüssels ist die Fähigkeit des Gerätes zur Erstellung der Daten des jeweiligen Volumengebers und zu deren Speicherung in der dem jeweiligen Volumengeber zugeordneten Speichereinheit um einen vorgegebenen, vorteilhafterweise kurzen, Zeitraum, beispielsweise um einen Monat, zu verlängern. Dieser Schlüssel kann beispielsweise für die jeweilige anerkannte Prüfstelle und/oder für das Gerät individualisiert sein, so dass er nicht von mehreren Prüfstellen oder anderen Subjekten und/oder nicht für mehrere solcher Geräte verwendbar ist. Dadurch wird ein Fälschen eines Volumengebers, d. h. insbesondere das Zuordnen der Daten eines Volumengebers zu einem oder mehreren weiteren Volumengebern, und/oder das Erstellen falscher Daten für einen Volumengeber verhindert oder zumindest erheblich erschwert.

Ausführungsbeispiele der Erfindung werden im Folgenden anhand einer Zeichnung näher erläutert.

Darin zeigt:

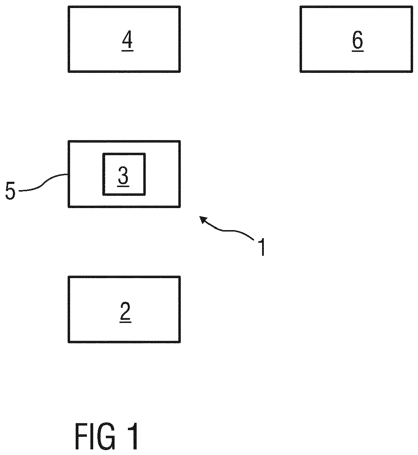

- Figur 1: schematisch ein Verfahren zur Herstellung einer Verbrauchswerterfassungsvorrichtung.

**Figur 1** zeigt ein Verfahren zur Herstellung einer Verbrauchswerterfassungsvorrichtung 1. In diesem Verfahren werden Daten eines Volumengebers 2 in einer dem Volumengeber 2 zugeordneten Speichereinheit 3 gespeichert. Anschließend wird der Volumengeber 2 mit einem elektronischen Zählwerk 4 gekoppelt und die Daten, insbesondere Parameter, des Volumengebers 2 werden an das elektronische Zählwerk 4 übertragen. Das elektronische Zählwerk 4 kann alternativ oder zusätzlich als ein elektronisches Rechenwerk ausgebildet sein oder ein solches umfassen. Beispielsweise umfasst das elektronische Zählwerk 4 ein solches elektronisches Rechenwerk, um erfasste Bewegungen, insbesondere Umdrehungen, des Volumengebers 2 in eine zu zählende Durchflussmenge und/oder Wärmemenge umzurechnen. Das elektronische Zählwerk 4 und/oder Rechenwerk wird im Folgenden als elektronisches Zählwerk 4 bezeichnet.

Das hier beschriebene Verfahren ermöglicht insbesondere eine Benutzung von elektronischen Zählwerken 4 von Volumengebern 2, beispielsweise von mechanischen Wasserzählern mit einem solchen elektronischen Zählwerk 4 oder von Wärmezählern mit einem solchen elektronischen Zählwerk 4, über mehr als eine Eichgültigkeitsdauer. Dazu werden für eine Reparatur der Verbrauchswerterfassungsvorrichtung 1 nur Verschleißteile ausgetauscht. Diese Verschleißteile betreffen insbesondere den Volumengeber 2. Zweckmäßigerweise wird der gesamte Volumengeber 2, vorteilhafterweise inklusive eines Gebergehäuses, ausgetauscht. Das elektronische Zählwerk 4 verbleibt am Einbauort der Verbrauchswerterfassungsvorrichtung 1. Diese Reparatur der Verbrauchswerterfassungsvorrichtung 1, zweckmäßigerweise durch Austausch des Volumengebers 2 gegen einen anderen, zweckmäßigerweise geeichten, Volumengebers 2 ist einfach, insbesondere von eingewiesenem Personal, durchführbar.

Das elektronische Zählwerk 4 stellt vorteilhafterweise Mittel und Methoden zur automatischen, objektiven und vom Menschen unabhängigen Bewertung dieser Reparatur zur Verfügung. Durch das im Folgenden näher beschriebene Verfahren wird sichergestellt, dass die reparierte Verbrauchswerterfassungsvorrichtung 1 vorgegebene Fehlergrenzen einhält. Der Nachweis der Einhaltung der Fehlergrenzen ist nachvollziehbar und überprüfbar. Das Verfahren der Reparatur und die Möglichkeit der weiteren Nutzung ist vorteilhafterweise ein Bestandteil einer Bauartzulassung eines mechanischen Wasserzählers mit elektronischem Zählwerk 4 oder eines Wärmezählers.

Eine elektronische Abtastung eines Volumengebers 2 ist rückwirkungsfrei, d. h. die Abtastung hat keinen Effekt darauf, wie sich zum Beispiel ein Flügelrad des Volumengebers 2 dreht. Das elektronische Zählwerk 4 liefert keine zusätzlichen mechanischen Fehler. Das elektronische Zählwerk 4 ist nach einer Eichgültigkeitsdauer noch nicht abgenutzt. Es führt die Volumenabtastung so gut aus wie ein neuwertiges elektronisches Zählwerk 4. Die Messfehler des Volumengebers 2 können ermittelt werden und in einer Korrekturfunktion im elektronischen Zählwerk 4 kompensiert werden. Die Korrekturfunktion wird mit dem Volumengeber 2 gekoppelt und der Volumengeber 2 stellt diese Korrekturfunktion dem elektronischen Zählwerk 4 in elektronisch lesbarer Form zur Verfügung.

Bei einer Reparatur der Verbrauchswerterfassungsvorrichtung 1, d. h. bei einem Austausch des Volumengebers 2 und somit der Kopplung des elektronischen Zählwerks 4 mit einem anderen Volumengeber 2, liest das elektronische Zählwerk 4 die Korrekturfunktion des Volumengebers 2 automatisch aus und überprüft die Unverfälschtheit der Daten.

Zweckmäßigerweise enthalten alle für derartige Volumengeber 2, insbesondere für die gleichen Volumengeber 2, d. h. für Volumengeber 2 gleicher Bauart, vorgesehene elektronische Zählwerke 4, zumindest in Bezug auf die Kompensation des Messfehlers des Volumengebers 2, identische oder gleiche Software. Somit kann ein Äquivalenzprinzip aufgestellt werden, das besagt, dass die mit einem elektronischen Zählwerk 4 nachgewiesene Messfunktion bei einem Volumengeber 2 identisch in einem anderen elektronischen Zählwerk 4 ausgeführt wird, wenn es die identische Korrekturfunktion benutzt. Aufgrund dieses Äquivalenzprinzips kann der Nachweis der Messrichtigkeit zum Beispiel im Reparaturfall mit dem Volumengeber 2 und einem Prüfstandszählwerk (quasi vorgezogen) durchgeführt werden und dieser Nachweis kann auf ein elektronisches Zählwerk 4 übertragen werden, das mit dem Volumengeber 2 gekoppelt und mit allen dazu nötigen Einstellungen versehen wurde. Dieses elektronische Zählwerk 4 muss dann vorteilhafterweise nicht mehr oder nur stichprobenweise nachweisen, dass dieser Prozess erfolgreich war. Die erfolgreiche Reparatur der Verbrauchswerterfassungsvorrichtung 1, beispielsweise des Wasserzählers oder Wärmezählers, beinhaltet vorteilhafterweise eine Sicherung gegen Manipulation.

Wie bereits oben beschrieben, werden bei der Kopplung des elektronischen Zählwerks 4 mit dem Volumengeber 2 die in der dem Volumengeber 2 zugeordneten Speichereinheit 3 gespeicherten Daten an das elektronische Zählwerk 4 übertragen. Die Daten werden vorteilhafterweise verschlüsselt in der dem Volumengeber 2 zugeordneten Speichereinheit 3 gespeichert und somit zweckmäßigerweise auch verschlüsselt an das elektronische Zählwerk 4 übertragen und in diesem entschlüsselt und verwendet. Hierfür weist die Speichereinheit 3 zweckmäßigerweise eine erste Datenübertragungsschnittstelle auf oder ist mit dieser verbunden und das elektronische Zählwerk 4 weist eine mit der ersten Datenübertragungsschnittstelle korrespondierende zweite Datenübertragungsschnittstelle auf oder ist mit dieser verbunden.

Die Daten umfassen insbesondere die Korrekturfunktion für den Volumengeber 2, mittels welcher die exakte Verbrauchswerterfassung sichergestellt wird. Diese Korrekturfunktion ist beispielsweise eine Kennlinie einer Umdrehungszahl eines als Flügelrad ausgebildeten oder ein solches umfassenden Volumengebers 2 in Abhängigkeit von einem Volumenfluss und/oder einer Durchflussmenge pro Zeit und/oder einem Wasserdruck. Mittels einer solchen Korrekturfunktion können beispielsweise Abweichungen von einer Standardvorgabe korrigiert werden.

Die Verbrauchswerterfassungsvorrichtung 1 ist beispielsweise, wie bereits beschrieben als ein Wasser-/Wärmezähler ausgebildet, d. h. als ein Wasserzähler, welcher zweckmäßigerweise eine Durchflussmenge des Wassers erfasst, oder als ein Wärmezähler, welcher zweckmäßigerweise eine Durchflussmenge des Wassers und zudem eine Temperatur des jeweils durchfließenden Wassers erfasst. Ein solcher Wasser-/Wärmezähler wird bereits in der DE 10 2009 030 828 B3 der Anmelderin beschrieben. Die hier beschriebene Lösung ist insbesondere eine Weiterbildung der in dieser DE 10 2009 030 828 B3 beschriebenen Herstellung der dort als Wasser-/Wärmezähler ausgebildeten Verbrauchswerterfassungsvorrichtung 1.

Die Kopplung des elektronischen Zählwerks 4 mit dem Volumengeber 2, auch als hydraulischer Geber bezeichnet, erfolgt zweckmäßigerweise auf die bereits in der DE 10 2009 030 828 B3 beschriebene Weise, d. h. über zumindest eine zerstörungsfrei nicht zu lösende Verbindung, vorzugsweise mittels eines Montagerings 5. Hierbei werden der Montagering 5 und ein Gebergehäuse des Volumengebers 2 durch eine erste zerstörungsfrei nicht zu lösende Verbindung miteinander verbunden und der Montagering 5 und ein Zählwerkgehäuse des elektronischen Zählwerks 4 werden durch eine zweite zerstörungsfrei nicht zu lösende Verbindung miteinander verbunden.

Zweckmäßigerweise weist der Montagering 5 die dem Volumengeber 2 zugeordnete Speichereinheit 3 auf, welche beispielsweise als ein elektronischer Speicherbaustein ausgebildet ist. Das Verbinden des Montagerings 5 mit dem Volumengeber 2, d. h. mit dessen Gehäuse, über die erste zerstörungsfrei nicht zu lösende Verbindung erfolgt zweckmäßigerweise an einem Prüfungsort, an welchem die Daten oder zumindest einige der Daten, insbesondere die Korrekturfunktion, des Volumengebers 2 ermittelt und/oder geprüft und in der dem Volumengeber 2 zugeordneten Speichereinheit 3 gespeichert werden, beispielsweise in einer anerkannten Prüfstelle für derartige Volumengeber 2. Durch die verschlüsselte Speicherung der Daten, insbesondere Parameter, des Volumengebers 2 in der dem Volumengeber 2 zugeordneten Speichereinheit 3, beispielsweise durch Mittel der schweren Kryptierung, wird sichergestellt, dass die Daten nicht verfälscht werden können und dass es vorteilhafterweise nicht möglich ist, unerkannt Duplikate der Daten herzustellen. Dies betrifft insbesondere die Korrekturfunktion, bei welcher durch die beschriebene Lösung sichergestellt ist, dass sie nicht verfälscht werden kann und vorteilhafterweise nicht unerkannt Duplikate hergestellt werden können. Dadurch können beispielsweise keine Raubkopien der Daten hergestellt werden, welche dann mit Volumengebern 2 verknüpft werden, um vorzutäuschen, dass es sich um ordnungsgemäß geprüfte Volumengeber 2 handelt.

Das elektronische Zählwerk 4 wird somit über einen Plombenring in Form des Montagerings 5 mit dem Volumengeber 2 verbunden, wobei dieser Montagering 5 stets zuerst am Volumengeber 2 befestigt wird. Durch Zerstören des Montagrings 5 können das elektronische Zählwerk 4 und der Volumengeber 2 voneinander getrennt werden.

Um die Verbrauchswerterfassungsvorrichtung 1 zu reparieren, kann der Volumengeber 2 nun durch einen anderen Volumengeber 2 ersetzt werden. Das alte elektronische Zählwerk 4 wird auf den neuen Volumengeber 2 aufgesetzt und eingerastet, d. h. in den Montagering 5 eingerastet. Der neue Volumengeber 2 weist hierfür einen neuen Montagering 5 auf, da der Montagering 5 des alten Volumengebers 2 durch das Trennen vom elektronischen Zählwerk 4 zerstört wurde. Der neue Montagering 5 gestattet durch das Einrasten des Volumengebers 2 und des elektronischen Zählwerks 4 an ihm das Trennen des elektronischen Zählwerks 4 vom Volumengeber 2 nur durch die Zerstörung des Montagerings 5.

Vorteilhafterweise testet das elektronische Zählwerk 4 regelmäßig, beispielsweise in kurzen Zeitabständen, die Identität des angeschlossenen Volumengebers 2 und bemerkt dadurch den Austausch selbständig. Das elektronische Zählwerk 4 führt daraufhin vorteilhafterweise eine Reihe von Tests durch, wie im Folgenden noch beschrieben wird. Im Erfolgsfall wird die Nummer des neuen Volumengebers 2 vorteilhafterweise für einige Zeit in einem Display des elektronischen Zählwerkes 4 angezeigt und vorteilhafterweise über eventuell vorhandene weitere Kommunikationskanäle des elektronischen Zählwerkes 4 weiterverbreitet. Im Fehlerfall wird dieser Fehlerfall vorteilhafterweise als permanente Fehlermeldung zur Anzeige gebracht und vorteilhafterweise ebenfalls über eventuell vorhandene weitere Kommunikationskanäle des elektronischen Zählwerkes 4 weiterverbreitet. Zweckmäßigerweise ist mit der Kontrolle der Anzeige die Reparatur der Verbrauchswerterfassungsvorrichtung 1 abgeschlossen.

Ein Vorteil einer solchen Reparatur der Verbrauchswerterfassungsvorrichtung 1 ist, dass sich die Identität des Zählwerkes 4 bei der Reparatur nicht ändert. Bis dahin aufgelaufene Zählerstände ändern sich ebenfalls nicht. Wenn das Zählwerk 4 mit einer stationären Funkauslesung betrieben wird, ändert sich auch diese Funkauslesung nicht, insbesondere eine Zeiteinteilung für Funkaussendungen. Insbesondere ist ein Aufwand für eine Verwaltung der Messstelle durch das Beibehalten der Identität des Zählwerkes 4 und der Zählerstände minimal, da kein Austausch der gesamten Verbrauchswerterfassungsvorrichtung 1 mit allen dazu nötigen Folgeprozessen vorgenommen wird.

Um eine derartige korrekte Reparatur zu ermöglichen, wird vorteilhafterweise sichergestellt, dass jedes elektronische Zählwerk 4, das in Verkehr kommt, jeden Volumengeber 2 korrekt abtasten kann, für welchen es vorgesehen ist. Des Weiteren wird vorteilhafterweise sichergestellt, dass die jeweilige Korrekturfunktion eindeutig mit dem jeweiligen Volumengeber 2 verknüpft ist, für welchen sie ermittelt wurde, und nicht verfälscht oder unbemerkt kopiert werden kann. Zudem wird zweckmäßigerweise sichergestellt, dass der Prozess zur Erzeugung von neuen oder neuwertigen Volumengebern 2, insbesondere von zur Kopplung mit elektronischen Zählwerken 4 freigegebenen neuen oder reparierten Volumengebern 2 sicher ist. Des Weiteren wird zweckmäßigerweise sichergestellt, dass ein Volumengeber 2 nicht wiederholt mit anderen Zählwerken 4 benutzt werden kann, zumindest nicht, ohne vorher geeicht worden zu sein.

Wie oben bereits erwähnt, wird zweckmäßigerweise sichergestellt, dass jedes Zählwerk 4 jeden Volumengeber 2, für den es vorgesehen ist, korrekt abtastet. Dies erfolgt vorteilhafterweise in einem Qualitätssicherungsprozess. Voraussetzung ist die Möglichkeit der quantitativen Bewertung der Abtastung. Die Grenzen der Genauigkeit der Volumenabtastung in Abhängigkeit der quantitativen Bewertung der Volumenabtastung werden bei der Produktentwicklung exploriert. Zum Beispiel darf bei 1000 Umdrehungen des Flügelrades des Volumengebers 2 ein maximaler Fehler von einer Flügelradumdrehung zusätzlich eines Fehlers von einer Abtasteinheit auftreten. Die Abtasteinheit ist der kleinste sicher messbare Teil der Flügelradumdrehung, zum Beispiel eine halbe Flügelradumdrehung. Dies entspricht dem Digitfehler in abgetasteten Systemen. Diese Grenzen werden im Weiteren bei der Absicherung der laufenden Produktion herangezogen. Vorteilhafterweise wird in einem beschleunigten Test bei der Produktentwicklung nachgewiesen, dass die Volumenabtastung auch über eine verlängerte Dauer als die Eichgültigkeitsdauer sicher arbeitet. Eine Berechnung einer Batterielebensdauer des elektronischen Zählwerks 4 muss zeigen, dass ein Einsatz des elektronischen Zählwerks 4 über mehr als eine zusätzliche Eichgültigkeitsdauer sichergestellt werden kann.

Das elektronische Zählwerk 4 testet regelmäßig, vorteilhafterweise in kurzen Zeitabständen, die Identität des angeschlossenen Volumengebers 2 und bemerkt dadurch das Entfernen des Volumengebers 2. Sind beide Teile über eine längere Zeit voneinander getrennt, wird vorteilhafterweise eine Fehlermeldung zur Anzeige gebracht und/oder über eventuell vorhandene weitere Kommunikationskanäle des elektronischen Zählwerkes 4 weiterverbreitet.

Vorteilhafterweise werden in einem Prüfaufbau, zum Beispiel mit einem Referenzzählwerk, die Werte jedes Volumengebers 2 überprüft. Zu schlechte Volumengeber 2 werden zurückgewiesen. Vorteilhafterweise werden in einem Prüfaufbau, zum Beispiel mit einem Referenzvolumengeber, die Werte jedes elektronischen Zählwerkes 4 überprüft. Zu schlechte elektronische Zählwerke 4 werden zurückgewiesen.

Auf diese Weise kann überzeugend sichergestellt werden, dass jedes elektronische Zählwerk 4 mit jedem Volumengeber 2 zusammenarbeiten kann und das dies auch mit einem neuen Volumengeber 2 und einem Zählwerk 4, das schon eine Eichgültigkeitsdauer im Einsatz war, der Fall ist.

Um eine ordnungsgemäße Funktion der Verbrauchswerterfassungsvorrichtung 1 sicherzustellen, ist sicherzustellen, dass eine eindeutige und unverfälschte Korrekturfunktion verwendet wird, d. h. insbesondere eine Korrekturfunktion, welche dem jeweiligen Volumengeber 2 eindeutig zugeordnet ist, vorteilhafterweise von einer anerkannten Prüfstelle, welche den Volumengeber 2 geeicht hat und dabei diese Korrekturfunktion ermittelt hat.

Die Korrekturfunktion wird, wie oben bereits erwähnt, im vorteilhafterweise als Plombenring ausgebildeten Montagering 5 des Volumengebers 2 mitgeführt, um sie dem elektronischen Zählwerk 4 zu übermitteln, wenn es mit dem Volumengeber 2 verbunden wird. Sie liegt in elektronisch lesbarer Form in der dem Volumengeber 2 zugeordneten Speichereinheit 3, zweckmäßigerweise in der Speichereinheit 3 des Montagerings 5, vor und wird vom elektronischen Zählwerk 4 bei der Reparatur der Verbrauchswerterfassungsvorrichtung 1 ausgelesen und überprüft, vorteilhafterweise sobald das elektronische Zählwerk 4 mit dem Volumengeber 2 gekoppelt ist.

Durch Mittel der schweren Kryptierung wird sichergestellt, dass die Korrekturfunktion nicht verfälscht werden kann und dass es nicht möglich ist unerkannt Duplikate herzustellen. Dadurch wird insbesondere sichergestellt, dass kein Hersteller solcher Volumengeber 2 Raubkopien der Daten, insbesondere der Korrekturfunktion, eines Volumengebers 2 herstellen und mit anderen Volumengebern 2 verknüpfen kann.

Die Daten in der dem Volumengeber 2 zugeordneten Speichereinheit 3 werden beim Erstellen zum Beispiel durch ein MAC (message autentification code) abgesichert. Dies ist ähnlich einer Signatur. Der einzige Unterschied zur Signatur ist der, dass sowohl Ersteller als auch Prüfer das Verschlüsselungsverfahren und den vollständigen Schlüssel kennen müssen und damit beide in der Lage sind, einen MAC zu berechnen (symmetrisches Verfahren). Es existiert kein öffentlicher Schlüssel. Das ist für die vorgestellte Applikation auch nicht nötig. Im Gegenteil, für jeden Dritten ist es so nicht möglich, zufällig generierte Datensätze schnell zu überprüfen. Neben MAC oder zusätzlich zu MAC sind auch andere Verfahren zur Absicherung möglich. Des Weiteren wäre anstelle von MAC beispielsweise die oben bereits erwähnte Signatur zur Absicherung möglich, gegebenenfalls kombiniert mit einem anderen Verfahren. Hierfür sind viele gebräuchliche Verfahren bekannt. MAC, wie hier beschrieben, weist insbesondere den Vorteil der Einfachheit und Nachnutzung sowie den Vorteil gebräuchlicher Methoden auf. Andere Methoden, beispielsweise auch die Signatur, würden einen zusätzlichen Aufwand im Gerät bedeuten, d. h. insbesondere im Gerät, welches die Daten erstellt und/oder in der dem Volumengeber 2 zugeordneten Speichereinheit 3 speichert und/oder im elektronischen Zählwerk 4, welches diese Daten nach dem Verbinden mit dem Volumengeber 2 ausliest.

Das Zählwerk 4 selbst kann vorteilhafterweise nicht dazu verwendet werden, beliebig viele Volumengeber 2 auf eventuelle Richtigkeit der Daten zu überprüfen, da es vorteilhafterweise nur eine limitierte Anzahl von Versuchen erlaubt. Bei der Vereinigung von Volumengeber 2 und elektronischem Zählwerk 4 werden die Daten des Volumengebers 2 in einem Log, beispielsweise in einem Flashspeicher eines Mikrocontrollers des elektronischen Zählwerks 4, unverlierbar im elektronischen Zählwerk 4 gespeichert. Nach einer vorgegebenen, zweckmäßigerweise kleinen Anzahl solcher Einträge wird jeder neu hinzukommende Volumengeber 2 zurückgewiesen.

Zweckmäßigerweise wird die Unverfälschtheit der Daten des Volumengebers in der diesem zugeordneten Speichereinheit 3 sichergestellt. Würde ein Fälscher auch nur ein Bit im Datenbereich ändern, würden in etwa die Hälfte aller Bits des Sicherheitsmerkmals umgekippt werden. Vorgeschlagen wird für die Absicherung der Daten in der dem Volumengeber 2 zugeordneten Speichereinheit 3 ein CBC-Verfahren (Cipher Block Chaining Mode), das mindestens AES128 (AES=Advanced Encryption Standard) als schwere Verschlüsselung benutzt. Als zusätzliche Sicherheit wird vorteilhafterweise das Datum der Prüfung durch die anerkannte Prüfstelle auf eine nur dem elektronischen Zählwerk 4 bekannte Weise in den Initialisierungsvektor des CBC-Verfahrens eingerechnet. Dies wird auch als Methode des "Versalzens" bezeichnet, d. h. es wird eine tabellenoptimierte Schlüsselermittlung verhindert. D. h. zusätzlich zum Geheimnis des Schlüssels existiert das Geheimnis des Verfahrens zur Bildung des Initialisierungsvektors. Damit ist ein anerkannt sicheres Verfahren (AES128) in unveränderter Weise im Einsatz und durch ein zusätzliches Geheimnis, das unabhängig vom Verfahren eingesetzt wird, abgesichert. Die Sicherheit des Verfahrens AES128 selbst wird dadurch nicht beeinträchtigt.

Zweckmäßigerweise wird durch technische Maßnahmen, beispielsweise durch das Verschließen der Debugschnittstelle eines Mikrocontrollers des elektronischen Zählwerks (zum Beispiel burn fuse) sichergestellt, dass aus dem elektronischen Zählwerk 4 Schlüssel und Firmware nicht ausgelesen werden können. Damit wird die Sicherheit beider Geheimnisse sichergestellt. Solche Maßnahmen werden von den Herstellern von Mikrocontrollern angeboten und sind auch für andere Zwecke gebräuchlich. Sie werden als sicher eingeschätzt.

Die Daten des Volumengebers 2 umfassen vorteilhafterweise mindestens:
- die Nummer des Volumengebers 2,
- eine Spezifikation des Volumengebers 2, beispielsweise eine Beachtung unterschiedlicher Baulängen und Durchflussbereiche,
- die Korrekturfunktion,
- ein Zeitstempel der Prüfung des Volumengebers 2 durch die anerkannte Prüfstelle,
- eine Kennung der anerkannten Prüfstelle, welche die Prüfung des Volumengebers 2 durchgeführt hat,
- ein Ende einer Eichgültigkeit des Volumengebers 2, ermittelbar beispielsweise aus dem Zeitstempel der Prüfung zuzüglich der Eichgültigkeitsdauer,
- MAC (message autentification code).

Damit können bei einem möglichen Betrugsversuch nur identische Kopien der Daten erstellt und einem anderen Volumengeber 2 zugeordnet werden und insbesondere keine Daten mit einer veränderten Nummer des Volumengebers 2, mit einer eigenen Korrekturfunktion oder mit einem der anderen oben genannten veränderten Daten.

Die Nummer des Volumengebers 2 wird bei der Auslesung/Funkübertragung mit zur Verfügung gestellt. D. h. das elektronische Zählwerk 4 sendet zumindest die Nummer des Volumengebers 2 an zumindest eine externe Einheit, beispielsweise an einen Datensammler oder an eine Zentrale zur Fernauslesung. Ein massenhaftes Auftauchen von Kopien der Daten ist damit zu entdecken.

Da der Zeitpunkt der Prüfung des Volumengebers 2 und das Ende der Eichgültigkeitsdauer ebenfalls in der dem Volumengeber 2 zugeordneten Speichereinheit 3 abgelegt sind, ist eine solche Kopie auch nicht lange von Wert, weil ihre Benutzung durch ein elektronisches Zählwerk 4 später abgewiesen wird, spätestens nach Ablauf der Eichgültigkeitsdauer.

Vorteilhafterweise wird ein mehrfaches Benutzen eines Volumengebers 2 zudem dadurch verhindert, dass beim Koppeln des Volumengebers 2 mit dem elektronischen Zählwerk 4 das elektronische Zählwerk 4 den Zeitpunkt der Kopplung und seine eigene Nummer an die dem Volumengeber 2 zugeordnete Speichereinheit 3 überträgt und darin speichert. Ist bereits eine Nummer eines anderen elektronischen Zählwerks 4 in der dem Volumengeber 2 zugeordneten Speichereinheit 3 vorhanden, so wird der Volumengeber 2 verworfen. Dies ist eine zusätzliche Sicherung des Volumengebers 2, die des Weiteren bereits das Zerstören der mechanischen Sicherung, insbesondere des Montagerings 5, beinhaltet, wenn einmal verbundene Volumengeber 2 und elektronische Zählwerke 4 wieder voneinander getrennt werden.

Aus der Angabe des Endes der Eichgültigkeit der Prüfung ist eine Einsatzdauer des Volumengebers 2 ableitbar. Das elektronische Zählwerk 4 verwirft Volumengeber 2, die das Ende der Eichgültigkeit überschritten haben.

Ein weiteres Sicherheitsrisiko stellt die Herstellung des Volumengebers 2, insbesondere die Zuordnung der Daten, insbesondere der Korrekturfunktion, zum Volumengeber 2 dar. Das Sicherheitsrisiko liegt dabei insbesondere bei einem Gerät 6, das in der anerkannten Prüfstelle die Daten für den jeweiligen Volumengeber 2 erstellt und einträgt. Dies kann beispielsweise ein modifiziertes elektronisches Zählwerk 4 sein, welches erweiterte Fähigkeiten in der Software aufweist, um diese Daten zu erstellen und in der Speichereinheit 3 zu speichern, welche dem jeweiligen Volumengeber 2 zugeordnet ist, beispielsweise bereits mittels des Montagerings 5 mit dem jeweiligen Volumengeber 2 verbunden ist, oder anschließend an die Speicherung dem jeweiligen Volumengeber 2 zugeordnet wird, beispielsweise mittels des Montagerings 5 mit dem Volumengeber 2 verbunden wird.

Ein Diebstahl und/oder eine Vervielfältigung dieses Geräts 6 muss sicher verhindert werden. Vorteilhafterweise wird dies dadurch erreicht, dass ein solches Gerät 6 nur temporär zur MAC-Berechnung befähigt ist. Damit kann es nicht benutzt werden, eine größere Anzahl von Volumengebern 2 zu erstellen, genauer gesagt diesen falsche Daten zuzuordnen. Insbesondere wird dadurch eine sichere Herstellung von Volumengebern 2, insbesondere von funktionstüchtigen und vorteilhafterweise geeichten und/oder mit einer korrekten Korrekturfunktion versehenen Volumengebern 2, sichergestellt. Dadurch wird insbesondere die Zuordnung falscher Daten, insbesondere einer falschen Korrekturfunktion, zu einem Volumengeber 2 verhindert. Insbesondere wird das Speichern solcher falscher Daten in der dem Volumengeber 2 zugeordneten Speichereinheit 3 verhindert.

Die Erneuerung der Fähigkeit zur MAC-Erstellung bedarf vorteilhafterweise einer autorisierten Handlung in der anerkannten Prüfstelle, d. h. der Kenntnis eines weiteren Geheimnisses, das vorteilhafterweise auf die anerkannte Prüfstelle beschränkt ist. Eine Möglichkeit ist zum Beispiel, der Prüfstelle einen Schlüssel zur Verfügung zu stellen, der nur eine kurze Zeit, beispielsweise nur einen Tag, Gültigkeit hat und die Fähigkeit des Gerätes 6 zur Erstellung und zum Schreiben der oben genannten Daten um einen kurzen Zeitraum, zum Beispiel einen Monat, verlängert. Weiterhin kann dieser Schlüssel für die anerkannte Prüfstelle und sogar für das Gerät 6 selbst individualisiert sein. Dadurch wird ein Fälschen eines individuellen Volumengebers 2, d. h. die Zuordnung von gefälschten Daten zu diesem Volumengeber 2, vorteilhafterweise praktisch unmöglich.

Von der anerkannten Prüfstelle wird somit ein jeweiliger Volumengeber 2 geprüft und vorteilhafterweise geeicht, wobei dessen jeweilige Korrekturfunktion ermittelt wird und zusammen mit den anderen oben genannten Daten mittels des Gerätes 6 in der dem Volumengeber 2 bereits zugeordneten oder anschließend von der anerkannten Prüfstelle dem Volumengeber 2 zugeordneten Speichereinheit 3 gespeichert wird. Zweckmäßigerweise ist die Speichereinheit 3 dem Volumengeber 2 durch Anbringen des Montagerings 5 am Volumengeber 2 zugeordnet oder der Montagering 5 wird nach dem Speichern der Daten am Volumengeber 2 angebracht, zweckmäßigerweise durch die anerkannte Prüfstelle, wodurch dann die Speichereinheit 3 dem Volumengeber 2 zugeordnet ist. Anschließend kann dann dieser Volumengeber 2 mit einem elektronischen Zählwerk 4 verbunden werden, wodurch die Verbrauchswerterfassungsvorrichtung 1 ausgebildet wird. Dabei werden die Daten aus der dem Volumengeber 2 zugeordneten Speichereinheit 3 auf das Zählwerk 4 übertragen, in welchem sie verwendet werden. Insbesondere wird die Korrekturfunktion zur Korrektur des Messfehlers des Volumengebers 2 verwendet.

Durch die individuelle Nummerierung von Volumengebern 2 sind diese wiederzuerkennen. Vorteilhafterweise wird die Nummer des jeweiligen Volumengebers 2 bei dessen In-Verkehr-Bringen, beispielsweise bei einer Übergabe vom Hersteller an einen Kunden, mit dem Empfänger des Volumengebers 2, d. h. mit dem Kunden, verknüpft. Zum Beispiel werden der Empfänger, d. h. der Kunde, und die Nummer des Volumengebers 2 registriert. Dies kann beispielsweise auch durch die anerkannte Prüfstelle erfolgen. Dadurch können der Volumengeber 2 und dessen Empfänger, d. h. der Kunde, der ihn erworben hat, stets miteinander in Verbindung gebracht werden.

Vorteilhafterweise wird die Nummer des Volumengebers 2 bei der Auslesung/Funkübertragung durch das elektronische Zählwerk 4 mit zur Verfügung gestellt. D. h. wird der Zählerstand des elektronischen Zählwerks 4 ausgelesen, beispielsweise mittels eines Datensammler oder einer Zentrale zur Fernauslesung, so wird die Nummer des Volumengebers 2 mit ausgelesen. Ein massenhaftes Auftauchen von Kopien der Daten eines Volumengebers 2, welche anderen Volumengebern 2 zugeordnet wurden, ist damit zu entdecken und zumindest einer ersten Stelle zuzuordnen, an der das Kopieren gestartet wurde, nämlich dem Kunden, der den originalen Volumengeber 2, dessen Daten kopiert und den anderen Volumengebern 2 zugeordnet wurden, erworben hat.

Das beschriebene Verfahren ermöglicht somit die Reparatur von Verbrauchswerterfassungsvorrichtungen 1, beispielsweise von mechanischen Wasserzählern mit elektronischem Zählwerk 4 oder von Wärmezählern, wobei das elektronische Zählwerk 4 weiter benutzt werden kann. Durch das vorgestellte Äquivalenzprinzip und weitere qualitätssichernde Maßnahmen kann sichergestellt werden, dass der Nachweis der Messrichtigkeit vorgezogen nur mit den ausgetauschten Komponenten erfolgen kann und auf die gesamte reparierte Verbrauchswerterfassungsvorrichtung 1 übertragen werden kann. Damit kann das elektronische Zählwerk 4 für mehr als eine Eichgültigkeitsdauer im Einsatz bleiben. Materialverschwendung und unnötige Transporte können vermieden werden.

Durch Tests innerhalb des elektronischen Zählwerkes 4 kann die Reparatur überprüft und validiert werden. Besonders qualifiziertes Personal ist nicht erforderlich, um eine solche Reparatur der Verbrauchswerterfassungsvorrichtung 1 durchführen zu können. Der Aufwand, der beim Verwalten eines Austausches einer gesamten Verbrauchswerterfassungsvorrichtung 1 an einer Messstelle nötig ist, entfällt hier. Die Identität der Verbrauchswerterfassungsvorrichtung 1 und Zählerstände bleiben über die Reparatur hinaus erhalten. Weiterhin wurde gezeigt, wie beim Hersteller und bei autorisierten Prüfstellen die Geheimnisse, die zum Erzeugen solcher geeichter Volumengeber 2, insbesondere zur korrekten Zuordnung der Daten zum jeweiligen Volumengeber 2, erforderlich sind, gewahrt werden, oder wie eine Pervertierung des Verfahrens durch Dritte zumindest extrem erschwert wird.

Das beschriebene Verfahren ermöglicht es somit einen sicheren Wechsel des Volumengebers 2 mit einer Absicherung gegen Manipulation und Missbrauch. Das Verfahren ermöglicht somit die Reparatur der Verbrauchswerterfassungsvorrichtung 1, wodurch ein vollständiger Austausch vermieden wird oder zumindest erst zu einem späteren Zeitpunkt erforderlich ist und das elektronische Zählwerk 4 für mehrere Eichperioden, beispielsweise für zwei Eichperioden, verwendet werden kann. Dadurch können Kosteneinsparungen realisiert werden. Zudem ist dadurch das Ab- und Anmelden des elektronischen Zählwerkes 4 in Funknetzen nicht erforderlich, da es an der Messstelle verbleibt, und die Verwaltung der Messstellendaten wird erleichtert. Des Weiteren wird ein Aufwand für das Ablesen vermieden, da keine Endablesung, Neuablesung und Bekanntgabe der abgelesenen Zählerstände an einen Kunden erforderlich sind. Die korrekte Reparatur und die Verhinderung von Manipulation und Missbrauch wird vorteilhafterweise durch vorrichtungsinterne Kontrollen sichergestellt. Des Weiteren wird eine effektive Sicherung des Gerätes 6 in der anerkannten Prüfstelle gegen Diebstahl erreicht oder es wird zumindest die Nutzung des Gerätes 6 zur Erstellung gefälschter Daten für eine Vielzahl von Volumengebern 2 verhindert.

Sollten massenhafte Kopien von Daten erstellt und anderen Volumengebern 2 zugeordnet werden, so kann dies auf die oben beschriebene Weise erkannt werden.

### BEZUGSZEICHENLISTE

- 1: Verbrauchswerterfassungsvorrichtung
- 2: Volumengeber
- 3: Speichereinheit
- 4: Zählwerk
- 5: Montagering
- 6: Gerät

## Patentansprüche

1. Verfahren zur Herstellung einer Verbrauchswerterfassungsvorrichtung (1),
wobei Daten, insbesondere Parameter, eines Volumengebers (2) in einer dem Volumengeber (2) zugeordneten Speichereinheit (3) gespeichert werden, wobei der Volumengeber (2) mit einem elektronischen Zählwerk (4) gekoppelt wird und wobei die Daten des Volumengebers (2) an das elektronische Zählwerk (4) übertragen werden, **dadurch gekennzeichnet, dass** die Daten verschlüsselt in der dem Volumengeber (2) zugeordneten Speichereinheit (3) gespeichert werden.

2. Verfahren nach Anspruch 1,
**dadurch gekennzeichnet, dass** die Daten mittels eines CBC-Verfahrens (Cipher Block Chaining Mode) verschlüsselt werden, dass mindestens AES128 (AES=Advanced Encryption Standard) als Verschlüsselung nutzt.

3. Verfahren nach einem der vorhergehenden Ansprüche,
**dadurch gekennzeichnet, dass** ein Datum einer Prüfung des Volumengebers (2) durch eine anerkannte Prüfstelle auf eine nur dem elektronischen Zählwerk (4) bekannte Weise in einen Initialisierungsvektor des CBC-Verfahrens eingerechnet wird.

4. Verfahren nach einem der vorhergehenden Ansprüche,
**dadurch gekennzeichnet, dass** die Daten mittels MAC (Message Authentication Code) abgesichert werden.

5. Verfahren nach einem der vorhergehenden Ansprüche,
**dadurch gekennzeichnet, dass** die Daten des Volumengebers (2) im elektronischen Zählwerk (4) gespeichert werden.

6. Verfahren nach Anspruch 5,
**dadurch gekennzeichnet, dass** nach der Speicherung der Daten einer vorgegebenen Anzahl von Volumengebern (2) die Speicherung der Daten eines weiteren Volumengebers (2) blockiert wird.

7. Verfahren nach einem der Ansprüche 4 bis 6,
**dadurch gekennzeichnet, dass** die Daten des Volumengebers (2) mindestens umfassen:
- eine Nummer des Volumengebers (2),
- eine Spezifikation des Volumengebers (2),
- eine Korrekturfunktion,
- ein Zeitstempel der Prüfung des Volumengebers (2) durch die anerkannte Prüfstelle,
- eine Kennung der anerkannten Prüfstelle, welche die Prüfung des Volumengebers (2) durchgeführt hat,
- ein Ende einer Eichgültigkeit des Volumengebers (2),
- MAC.

8. Verfahren nach Anspruch 7,
**dadurch gekennzeichnet, dass** das elektronischen Zählwerk (4) zumindest die Nummer des Volumengebers (2) an zumindest eine externe Einheit sendet.

9. Verfahren nach einem der vorhergehenden Ansprüche,
**dadurch gekennzeichnet, dass** ein Zeitpunkt der Kopplung des Volumengebers (2) mit dem elektronischen Zählwerk (4) und eine Nummer des elektronischen Zählwerks (4) an die dem Volumengeber (2) zugeordnete Speichereinheit (3) übertragen und darin gespeichert werden.

10. Verfahren nach einem der vorhergehenden Ansprüche,
**dadurch gekennzeichnet, dass** die Daten des Volumengebers (2) mittels eines Gerätes (6) erzeugt und in der diesem zugeordneten Speichereinheit (3) gespeichert werden, welches nur temporär zur MAC-Berechnung befähigt ist.

## Claims

1. Method for producing a consumption value recording apparatus (1), wherein data, in particular parameters, of a volume transmitter (2) are stored in a storage unit (3) associated with the volume transmitter (2), wherein the volume transmitter (2) is coupled to an electronic meter (4) and wherein the data of the volume transmitter (2) are transmitted to the electronic meter (4), **characterized in that** the data are stored in the storage unit (3) associated with the volume transmitter (2) in encrypted form.

2. Method according to Claim 1,
**characterized in that** the data are encrypted by means of a CBC method (cipher block chaining mode) that uses at least AES128 (AES = advanced encryption standard) as encryption.

3. Method according to either of the preceding claims,
**characterized in that** a date of a test on the volume transmitter (2) by a recognized test centre is included in an initialization vector of the CBC method in a manner that is known only to the electronic meter (4).

4. Method according to one of the preceding claims,
**characterized in that** the data are protected by means of MAC (message authentication code).

5. Method according to one of the preceding claims,
**characterized in that** the data of the volume transmitter (2) are stored in the electronic meter (4).

6. Method according to Claim 5,
**characterized in that** storage of the data of a further volume transmitter (2) is blocked after the data of a predefined number of volume transmitters (2) have been stored.

7. Method according to one of Claims 4 to 6,
**characterized in that** the data of the volume transmitter (2) comprise at least:
- a number of the volume transmitter (2),
- a specification of the volume transmitter (2),
- a correction function,
- a timestamp of the test on the volume transmitter (2) by the recognized test centre,
- an identifier of the recognized test centre that has performed the test on the volume transmitter (2),
- an end of a calibration validity of the volume transmitter (2),
- MAC.

8. Method according to Claim 7,
**characterized in that** the electronic meter (4) transmits at least the number of the volume transmitter (2) to at least one external unit.

9. Method according to one of the preceding claims,
**characterized in that** a time of coupling of the volume transmitter (2) to the electronic meter (4) and a number of the electronic meter (4) are transmitted to the storage unit (3) associated with the volume transmitter (2) and are stored in said storage unit.

10. Method according to one of the preceding claims,
**characterized in that** the data of the volume transmitter (2) are generated by means of a device (6) and are stored in the storage unit (3) associated with said device, which is capable of MAC calculation only temporarily.

## Revendications

1. Procédé de fabrication d'un dispositif d'acquisition de valeur de consommation (1), des données, notamment des paramètres, d'un transmetteur de volume (2) étant mémorisées dans une unité de mémoire (3) associée au transmetteur de volume (2), le transmetteur de volume (2) étant couplé à un compteur électronique (4) et les données du transmetteur de volume (2) étant transmises au compteur électronique (4), **caractérisé en ce que** les données sont mémorisées chiffrées dans l'unité de mémoire (3) associée au transmetteur de volume (2).

2. Procédé selon la revendication 1, **caractérisé en ce que** les données sont chiffrées au moyen d'un procédé CBC (Cipher Block Chaining Mode - Mode de chiffrement par enchaînement des blocs) qui utilise comme chiffrement au moins l'AES128 (AES = Advanced Encryption Standard - Norme de cryptage avancé).

3. Procédé selon l'une des revendications précédentes, **caractérisé en ce qu'**une date d'un contrôle du transmetteur de volume (2) par un organisme de contrôle reconnu est incluse dans le calcul d'un vecteur d'initialisation du procédé CBC d'une manière qui n'est connue que du compteur électronique (4).

4. Procédé selon l'une des revendications précédentes, **caractérisé en ce que** les données sont sécurisées au moyen d'un MAC (Message Authentication Code - Code d'authentification de message).

5. Procédé selon l'une des revendications précédentes, **caractérisé en ce que** les données du transmetteur de volume (2) sont mémorisées dans le compteur électronique (4).

6. Procédé selon la revendication 5, **caractérisé en ce qu'**après la mémorisation des données d'un nombre prédéfini de transmetteurs de volume (2), la mémorisation des données d'un transmetteur de volume (2) supplémentaire est bloquée.

7. Procédé selon l'une des revendications 4 à 6, **caractérisé en ce que** les données du transmetteur de volume (2) comprennent au moins :
- un numéro du transmetteur de volume (2),
- une spécification du transmetteur de volume (2),
- une fonction de correction,
- une estampille temporelle du contrôle du transmetteur de volume (2) par l'organisme de contrôle reconnu,
- un identificateur de l'organisme de contrôle reconnu qui a effectué le contrôle du transmetteur de volume (2),
- une fin d'une validité d'étalonnage du transmetteur de volume (2),
- le MAC.

8. Procédé selon la revendication 7, **caractérisé en ce que** le compteur électronique (4) envoie au moins le numéro du transmetteur de volume (2) à au moins une unité externe.

9. Procédé selon l'une des revendications précédentes, **caractérisé en ce qu'**un instant du couplage du transmetteur de volume (2) avec le compteur électronique (4) et un numéro du compteur électronique (4) sont transmis à l'unité de mémoire (3) associée au transmetteur de volume (2) et sont mémorisés dans celle-ci.

10. Procédé selon l'une des revendications précédentes, **caractérisé en ce que** les données du transmetteur de volume (2) sont générées au moyen d'un appareil (6) et sont mémorisées dans l'unité de mémoire (3) associée à celui-ci, lequel n'est que temporairement apte à effectuer un calcul de MAC.
